# EUROPÄISCHE PATENTSCHRIFT

(11) **EP 2 130 727 B1**
(45) Veröffentlichungstag und Bekanntmachung des Hinweises auf die Patenterteilung: **14.02.2018**
(21) Anmeldenummer: 09007020.2
(22) Anmeldetag: 26.05.2009
(51) Int. Cl.: B60S 1/08

(54) **Verfahren und Schablone zum Aufbringen einer Haftschicht auf eine Sensorvorrichtung**
Method and mould for applying an adhesive layer to a sensor device
Procédé et gabarit destinés à l'application d'une couche de colle sur un dispositif de capteur

(30) Priorität: 05.06.2008 DE 102008026997
(43) Veröffentlichungstag der Anmeldung: 09.12.2009
(73) Patentinhaber: PMA/TOOLS AG, 47877 Willich (DE)
(72) Erfinder: Westerburg, Detlev, 41366 Schwalmtal (DE); Coenen, Dominik, 41747 Viersen (DE)
(74) Vertreter: DREISS Patentanwälte PartG mbB

(56) Entgegenhaltungen:
- EP-A2- 1 431 146
- DE-A1-102007 012 889
- DE-A1-102007 039 776
- DE-U1-202006 020 338
- US-B1- 6 581 484

## Beschreibung

Die Erfindung betrifft ein Verfahren zum Aufbringen einer Haftschicht auf eine Sensorvorrichtung und eine Schablone zur Verwendung in einem derartigen Verfahren. Bei der Sensorvorrichtung kann es sich insbesondere um eine Sensorvorrichtung zur Befestigung an einer glatten Fläche, beispielsweise einer Frontscheibe eines Kraftfahrzeugs handeln, und es kann sich insbesondere um eine optische Sensorvorrichtung handeln. Allgemein kann es sich bei der Sensorvorrichtung beispielsweise um einen mit Strahlung, vorzugsweise Infrarotlicht, arbeitenden Regen-, Solar-, Feuchtigkeits- und/oder Lichtsensor handeln.

Unter einer Haftschicht ist eine Schicht zu verstehen, die geeignet ist, flächig an einer Frontscheibe eines Kraftfahrzeugs anzuhaften, beispielsweise durch eine Selbsthaftungskraft, etwa mittels Adhäsion oder mittels Klebkraft, und die geeignet ist, an der Sensorvorrichtung anzuhaften. Insbesondere kann die Haftschicht nach dem Aufbringen fest mit der Sensorvorrichtung verbunden sein. Die Haftschicht bildet ein Koppelmedium zwischen der glatten Fläche und der Sensorvorrichtung. Die Haftschicht kann beispielsweise einen RTV-2-Silikon-Kautschuk enthalten oder daraus bestehen. Ein solches Silikon-Material ist beispielsweise unter dem Handelsnamen Semicosil 912 von der Firma Wacker Chemie GmbH erhältlich.

Es sind optische Sensorvorrichtungen, beispielsweise Lichtsensoren oder Regentropfensensoren, bekannt, bei denen ein optischer Sensor über eine derartige Haftschicht, beispielsweise in Form eines Haftplättchens, an eine Scheibe angekoppelt wird. Das Haftplättchen kann beispielsweise auf die Sensorvorrichtung aufgelegt werden, bevor diese an der Scheibe angebracht wird. Es ist auch bekannt, mittels Aufsetzen einer Formhälfte auf die Sensorvorrichtung die Haftschicht in einem Spritzgußverfahren mit einer geschlossenen Form unter Druck und bei großer Hitze auf eine Kunststoffoberfläche der Sensorvorrichtung aufzubringen. Dadurch ergibt sich ein besonders gutes Anhaften der Haftschicht an der Sensorvorrichtung.

Wenn beim Austausch der Frontscheibe eines Kraftfahrzeugs die Sensorvorrichtung von der Scheibe abgenommen wird, kann es zu einer Beschädigung der Haftschicht kommen. Beispielsweise kann die Haftschicht an der Scheibe hängen bleiben und sich von der Sensorvorrichtung ablösen. Dadurch ist beim Anbringen der Sensorvorrichtung auf einer neuen Scheibe eine ordnungsgemäße optische Ankopplung der Sensorvorrichtung an die Scheibe nicht mehr gewährleistet, so daß die Sensorvorrichtung funktionsuntüchtig wird. Der Ersatz der Haftschicht durch Entfernen der alten Haftschicht und Auflegen eines neuen Haftplättchens ist jedoch aufwendig und bringt die Gefahr des Verschmutzens der Sensorvorrichtung oder des Haftplättchens mit sich, insbesondere wenn ein Material verwendet wird, das stark klebt oder dazu neigt, elektrostatisch Schmutz anzuziehen.

Aufgabe der Erfindung ist es daher, ein Verfahren und/oder eine Vorrichtung zu schaffen, mit dem/der eine Haftschicht, insbesondere eine Haftschicht zur optischen Ankopplung eines optischen Sensors an eine Scheibe, zuverlässig auf eine Sensorvorrichtung aufgebracht werden kann. Dabei sollte eine möglichst dauerhafte, gute und präzise Ankopplung der Haftschicht an die Sensorvorrichtung erzielt werden.

Diese Aufgabe wird erfindungsgemäß gelöst durch ein Verfahren zum Aufbringen einer Haftschicht auf eine Sensorvorrichtung mit den Schritten:
a) Aufsetzen einer Schablone auf die Sensorvorrichtung, welche Schablone eine Schablonenöffnung aufweist, wobei die Schablonenöffnung auf einer Oberfläche der Sensorvorrichtung angeordnet wird;
b) Befüllen der Schablonenöffnung mit einer gelartigen Masse, um die Oberfläche der Sensorvorrichtung innerhalb der Schablonenöffnung zu bedecken;
c) Härtenlassen der Masse, um die Haftschicht zu bilden.

Vorzugsweise umfaßt das Verfahren weiter den Schritt:
d) Abnehmen der Schablone von der Sensorvorrichtung

Der Begriff "Sensorvorrichtung" umfaßt insbesondere eine optische Sensorvorrichtung der oben beschriebenen Art. Die Haftschicht kann insbesondere eine werden kann. Dabei sollte eine möglichst dauerhafte, gute und präzise Ankopplung der Haftschicht an die Sensorvorrichtung erzielt werden.

Diese Aufgabe wird erfindungsgemäß gelöst durch ein Verfahren zum Aufbringen einer Haftschicht auf eine Sensorvorrichtung mit den Schritten:
a) Aufsetzen einer Schablone auf die Sensorvorrichtung, wobei die Schablone eine Schablonenöffnung aufweist und die Schablonenöffnung auf einer Oberfläche der Sensorvorrichtung angeordnet wird;
b) Befüllen der Schablonenöffnung mit einer gelartigen Masse, um die Oberfläche der Sensorvorrichtung innerhalb der Schablonenöffnung zu bedecken;
c) Härtenlassen der Masse, um die Haftschicht zu bilden,
wobei in Schritt b) die Sensorvorrichtung und die Schablone derart angeordnet werden, dass die genannte Oberfläche nach oben gerichtet und horizontal ist,
und wobei vor und/oder bei dem Härtenlassen der Masse unter dem Einfluss der Schwerkraft eine gleichmäßige Höhe der Masse an einer freien Oberseite der Masse in der Schablonenöffnung ausgebildet wird.

Vorzugsweise umfaßt das Verfahren weiter den Schritt:
d) Abnehmen der Schablone von der Sensorvorrichtung

Der Begriff "Sensorvorrichtung" umfaßt insbesondere eine optische Sensorvorrichtung der oben beschriebenen Art. Die Haftschicht kann insbesondere eine Haftschicht der oben beschriebenen Art sein, die zur optischen Ankopplung der Sensorvorrichtung an eine Scheibe geeignet ist. Die Haftschicht ist vorzugsweise insbesondere transluzent oder durchsichtig und/oder für Infrarotstrahlung durchlässig. Vorzugsweise ist die Haftschicht einfärbbar. Unter der Schablonenöffnung ist insbesondere eine Öffnung zu verstehen, die durch einen Fensterausschnitt in der Schablone gebildet wird, d.h. einen durch die Schablone durchgehenden Ausschnitt. Somit liegt insbesondere in Schritt (b) die genannte Oberfläche der Sensorvorrichtung frei, bevor sie von der gelartigen Masse bedeckt wird, und in Schritt (c) liegt die Oberfläche der Masse im oberen Bereich der Schablonenöffnung frei. Mit anderen Worten wird in Schritt (b) vorzugsweise die Schablonenöffnung in einem offenen Gieß- oder Spritzverfahren befüllt.

Bei der gelartigen Masse handelt es sich vorzugsweise um ein Gel, welches an der Luft aushärtet. Beispielsweise kann es sich um ein Zweikomponentengel handeln, wobei die beiden Komponenten beim Zuführen der gelartigen Masse zur Schablonenöffnung miteinander gemischt werden. Ein geeignetes Gel ist beispielsweise unter der Bezeichnung SilGel 612 von der Firma Wacker im Handel erhältlich.

In Schritt c) ist nach einer gewissen Zeit, der sogenannten Topfzeit, die gelartige Masse so weit ausgehärtet, daß in Schritt d) die Schablone abgezogen werden kann. Dabei bleibt die hergestellte Haftschicht (das Koppelmedium) auf der Oberfläche der Sensorvorrichtung zurück, so daß die Funktionalität der Sensorvorrichtung wiederhergestellt ist. Vorzugsweise erfolgt in Schritt c) eine Temperierung oder Erwärmung der Sensorvorrichtung und/oder des Gels, vorzugsweise mittels einer Heizvorrichtung, insbesondere einer unter der Sensorvorrichtung angeordneten Heizvorrichtung. Dadurch kann das Aushärten unterstützt oder beschleunigt werden.

Das Verfahren hat den Vorteil, daß es ohne einen großen apparativen Aufwand, wie er beispielsweise zur Herstellung einer Haftschicht im Spritzgußverfahren erforderlich wäre, durchführbar ist. Es kann somit insbesondere vor Ort beim Auswechseln einer Frontscheibe eines Kraftfahrzeugs einfach und ohne großen Zeitaufwand durchgeführt werden.

Das Verfahren kann insbesondere Teil eines Verfahrens zum Abnehmen einer mittels einer Haftschicht oder eines Haftplättchens optisch an eine Scheibe angekoppelten Sensorvorrichtung von der Scheibe und Anordnen derselben Sensorvorrichtung mittels einer Haftschicht an einer Scheibe sein, wobei das Verfahren die Schritte umfaßt:
- Abnehmen der Sensorvorrichtung von der Scheibe und Entfernen der Haftschicht;
- Zurverfügungstellen einer neuen Haftschicht durch Aufbringen der Haftschicht auf die Sensorvorrichtung mit den oben genannten Verfahrensschritten; und
- Anordnen der Sensorvorrichtung mit der Haftschicht an beispielsweise einer anderen Scheibe, um die Sensorvorrichtung optisch an die Scheibe anzukoppeln.

Es kann somit eine über die Haftschicht an eine Scheibe angekoppelte Sensorvorrichtung repariert werden, indem die Haftschicht neu aufgebracht wird.

Weiter wird die Aufgabe gelöst durch eine Schablone zur Verwendung in dem erfindungsgemäßen Verfahren, aufweisend eine Grundplatte, in der eine Schablonenöffnung gebildet ist, und eine von der Grundplatte abstehende Wand, um eine entsprechend geformte Sensorvorrichtung seitlich zu umgreifen, insbesondere formschlüssig zu umgreifen.

Bevorzugte Ausführungsformen der Erfindung ergeben sich aus den Unteransprüchen.

Vorzugsweise wird in Schritt a) die Schablone formschlüssig auf die Sensorvorrichtung aufgesetzt. Dadurch ist die Position der herzustellenden Haftschicht auf der Sensorvorrichtung festgelegt.

Vorzugsweise begrenzt beim Befüllen der Schablonenöffnung die Wand der Schablonenöffnung die Ausbreitung des gelartigen Materials auf der Oberfläche. Auf diese Weise erhält die Haftschicht eine definierte Form.

Vorzugsweise wird in Schritt (b) die Schablonenöffnung bis zu ihrem oberen Rand befüllt. Eine Höhe der Schablonenöffnung entspricht vorzugsweise einem vorgegebenen Abstand der Sensorvorrichtung von der glatten Fläche. Durch ein Befüllen der Schablonenöffnung bis zum oberen Rand ist somit eine Haftschicht der gewünschten Stärke einfach herstellbar, um zu gewährleisten, daß beispielsweise ein vorgegebener Abstand der Sensorvorrichtung zu einer Scheibe, und somit ein vorgegebener Abstand von innerhalb der Sensorvorrichtung angeordneten Detektoren oder Strahlungskörpern zur Scheibe eingehalten wird.

Vorzugsweise ist die Schablonenöffnung beabstandet vom Rand der besagten Oberfläche des Sensors. Dadurch reicht die Haftschicht nicht an den Rand der Oberfläche heran.

Die besagte Oberfläche ist insbesondere im wesentlichen eben. Bei einer derartigen Sensorvorrichtung begrenzt die Wand der Schablonenöffnung allseitig die Ausbreitung des gelartigen Materials auf der Oberfläche, so daß die Sensorvorrichtung selbst keine Einfassung für die Haftschicht aufweisen muß.

Erfindungsgemäß werden in Schritt (b) die Sensorvorrichtung und die Schablone derart angeordnet, daß die genannte Oberfläche nach oben gerichtet und horizontal ist. Erfindungsgemäß wird vor und/oder bei dem Härtenlassen der Masse unter dem Einfluß der Schwerkraft eine gleichmäßige Höhe der Masse an einer freien Oberfläche der Masse in der Schablonenöffnung ausgebildet. Dies ist beispielsweise durch eine hinreichende Fließfähigkeit des Materials erreichbar. Dadurch kann die erzeugte Haftschicht eine besonders gute optische Ankopplung an eine glatte Scheibe bewirken.

Vorzugsweise liegt in Schritt (b) ein Rand der Schablonenöffnung auf der Oberfläche auf. Dadurch kann erreicht werden, daß sich das Material nicht oder kaum unter die Schablone ausbreitet.

Vorzugsweise ist ein Grundkörper der Schablone biegsam oder flexibel und/oder elastisch und ist vorzugsweise aus einem Silikongummi hergestellt. Besonders bevorzugt ist die Schablone einteilig aus einem Silikongummi hergestellt. Durch eine so erreichte gewisse Flexibilität der Schablone kann diese nach dem Härten der Haftschicht leicht entfernt werden.

Vorzugsweise weist die Schablone eine Wand auf und wird auf die Sensorvorrichtung derart aufgesetzt, daß die Wand die Sensorvorrichtung seitlich umgreift, vorzugsweise formschlüssig umgreift. Dadurch kann die Lage der Haftschicht in Bezug auf die Sensorvorrichtung vorgegeben werden. Die Wand kann durchgehend oder unterbrochen sein, d.h., aus mehreren Wandelementen bestehen. Bei der erfindungsgemäßen Schablone verläuft die Wand vorzugsweise um die Schablonenöffnung herum, beispielsweise durchgehend um die Schablonenöffnung herum.

In einer bevorzugten Ausführungsform weist die Schablonenöffnung geneigte Wände auf. Vorzugsweise verjüngt sich insbesondere bei auf die Sensorvorrichtung aufgesetzter Schablone die Schablonenöffnung von der Sensoroberfläche ausgehend im Querschnitt nach oben. D.h., die Schablonenöffnung weitet sich nach innen, d.h., in eine Richtung zur Seite der Wand hin, auf. Dadurch ist die Schablone leichter von der Haftschicht abzunehmen.

Ein bevorzugtes Ausführungsbeispiel der Erfindung wird im folgenden anhand der Zeichnung näher erläutert.

Es zeigen:
- Fig. 1: eine Sensorvorrichtung, die über eine Haftschicht optisch an eine erste Scheibe angekoppelt ist;
- Fig. 2: die Sensorvorrichtung mit entfernter Haftschicht und einer aufgesetzten Schablone entlang der Schnittebene II-II aus Fig. 3;
- Fig. 3: die Anordnung aus Fig. 2 in einer Draufsicht;
- Fig. 4: die Anordnung aus Fig. 2 nach dem Befüllen einer Schablonenöffnung mit einer gelartigen Masse;
- Fig. 5: die Sensorvorrichtung mit einer durch die ausgehärtete Masse gebildeten Haftschicht; und
- Fig. 6: die über die Haftschicht an eine zweite Scheibe optisch angekoppelte Sensorvorrichtung;
- Fig. 7: eine Schablone gemäß einer zweiten Ausführungsform in einer Ansicht von unten; und
- Fig. 8: die Schablone aus Fig. 7, aufgesetzt auf eine Sensorvorrichtung mit entfernter Haftschicht, entlang der Schnittebene VIII-VIII aus Fig. 7.

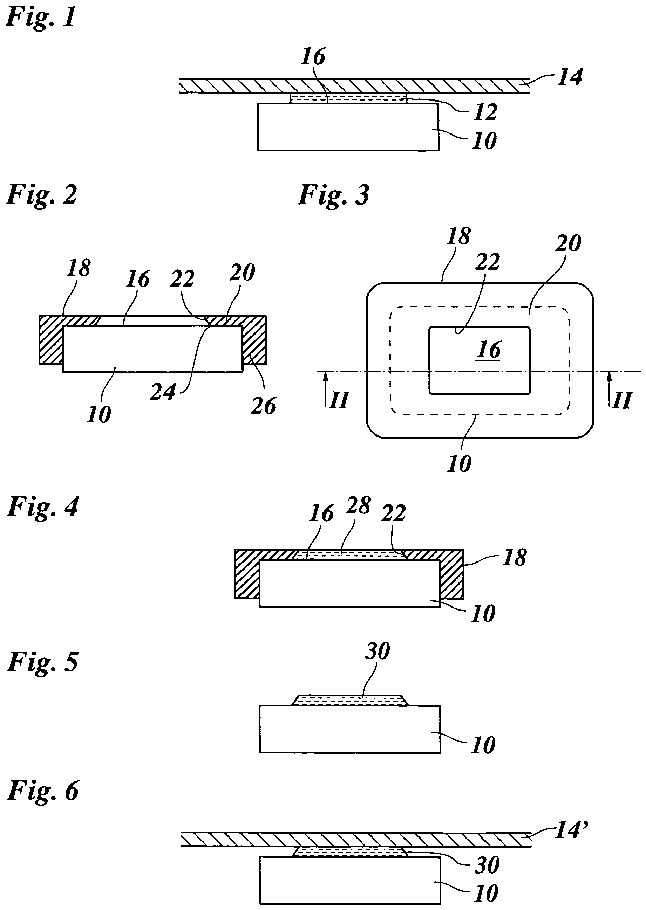

Die Fig. 1, 2 und 4 bis 6 und 8 sind jeweils Schnittdarstellungen, wobei die Schablone im Schnitt schraffiert dargestellt ist.

Die in den Figuren dargestellte Sensorvorrichtung 10 ist beispielsweise ein optischer Licht- oder Regentropfensensor, der über eine Haftschicht 12 an eine erste Frontscheibe 14 eines Kraftfahrzeugs optisch angekoppelt ist. Um nach dem Austausch der Frontscheibe 14 durch eine neue Frontscheibe 14' (Fig. 6) die Sensorvorrichtung 10 erneut optisch an die Scheibe 14' ankoppeln zu können, wird wie folgt vorgegangen.

Zunächst wird die Haftschicht 12 entfernt und eine darunterliegende Oberfläche 16 der Sensorvorrichtung 10 wird ggf. gereinigt. Eine Schablone 18 wird beispielsweise innen mit einem handelsüblichen Silikonspray eingesprüht, um ein Anhaften des einzufüllenden gelartigen Materials zu verhindern.

Dann wird, wie in den Fig. 2 und 3 zu sehen ist, die Schablone 18 auf die Sensorvorrichtung 10 aufgesetzt, oder es wird umgekehrt die Sensorvorrichtung 10 in die umgedrehte Schablone 18 eingesetzt und dann die Schablone 18 umgedreht. Eine Grundplatte 20 der Schablone 18, in der ein Ausschnitt eine Schablonenöffnung 22 bildet, wird auf die Oberfläche 16 aufgelegt, so daß ein unterer Rand 24 der Schablonenöffnung 22 annähernd auf der Oberfläche 16 aufliegt. Dabei ist ein geringfügiger Abstand unschädlich, da hier kaum Material zwischen Silikonplatte 20 und die Oberfläche 16 eindringen wird. Wie in Fig. 2 zu sehen ist, sind die Wände der Schablonenöffnung 22 in Bezug auf die Grundplatte 20 geneigt, so daß sich die Schablonenöffnung 22 von der Oberfläche 16 ausgehend nach oben verjüngt.

Eine allseitig umlaufende Wand 26 der Schablone 18 steht am Rand der Grundplatte 20 nach unten ab und umgreift die Sensorvorrichtung 10 seitlich formschlüssig. Die Schablone 18 ist einstückig aus einem Silikongummi hergestellt und ist flexibel.

Die Sensorvorrichtung 10 mit der Schablone 18 wird horizontal ausgerichtet, so daß die Oberfläche 16 nach oben gerichtet ist. Dann wird, wie in Fig. 4 gezeigt, die Schablonenöffnung 22 mit einem Zweikomponentengel 28 bis zur Oberseite der Schablonenöffnung 22 befüllt.

Fig. 4 zeigt, daß innerhalb der Schablonenöffnung 22 die Oberfläche 16 von dem Gel 28 bedeckt wird und daß sich an der Oberseite der Schablonenöffnung 22 eine im wesentlichen gleichmäßige Höhe des Gels 28 ausbildet.

Beim Aushärten des Gels 28 bildet dieses eine Haftschicht 30, und die Schablone 18 wird anschließend abgenommen, wie in Fig. 5 gezeigt. Optional erfolgt eine Temperierung der Sensorvorrichtung 10 und/oder des Gels 28 während des Aushärtens, um das Aushärten zu unterstützen oder zu beschleunigen.

Fig. 6 zeigt die Sensorvorrichtung 10, die mittels der Haftschicht 30 optisch an die neue Scheibe 14' angekoppelt ist.

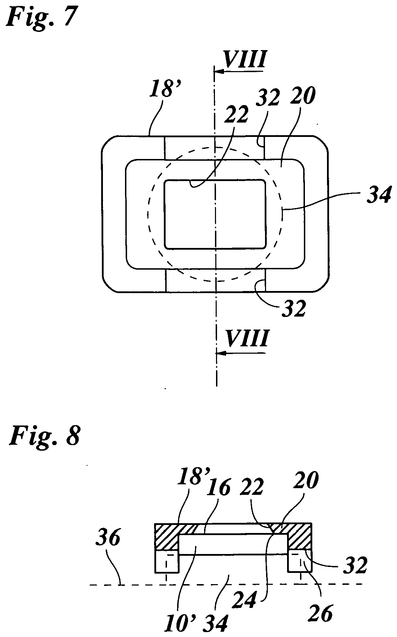

Die in den Fig. 7 und 8 dargestellte Schablone 18' unterscheidet sich von der Schablone 18 lediglich dadurch, daß an der Unterseite der Schablone 18' in der umlaufenden Wand 26 Ausnehmungen 32 vorgesehen sind. Diese Ausnehmungen 32 dienen dazu, beim Aufsetzen der Schablone 18' auf eine Sensorvorrichtung 10' mit geringerer Höhe als die freie Höhe im Inneren der Schablone, also die Höhe von unterhalb der Grundplatte 20 bis zum unteren Ende der Wand 26, einen freien Raum zur Verfügung zu stellen, der ein Anordnen der Schablone 18' mit Sensorvorrichtung 10' auf einer seitlich über die Sensorvorrichtung 10' hinausragenden Unterlage 34 ermöglicht. Der seitlich über die Sensorvorrichtung 10' herausragende Teil der Unterlage 34 wird dann in den Aussparungen 32 aufgenommen.

Bei der Unterlage 34 kann es sich beispielsweise um eine Heizvorrichtung, etwa eine Heizplatte zum Beheizen der Sensorvorrichtung 10' während des Aushärtens der gelartigen Masse handeln, die beispielsweise auf einem horizontal ausgerichteten Boden 36 einer Hilfsvorrichtung zur Reparatur der Sensorvorrichtung 10' angeordnet ist. Durch eine derartige Heizvorrichtung kann eine Temperierung der Sensorvorrichtung 10' während des Aushärtens erfolgen, um das Aushärten zu beschleunigen. Die Unterlage 34 kann beispielsweise im wesentlichen zylindrisch sein und hat im gezeigten Beispiel einen Durchmesser, der größer ist als die Ausdehnung der Sensorvorrichtung 10' quer zu ihrer Längsrichtung.

Die Aussparungen 32 können optional auch bis an die Grundplatte 20 heranreichen, so daß die Wand 26 in mehrere Wandelemente unterteilt ist. Dennoch wird durch das formschlüssige Umgreifen der Sensorvorrichtung 10' durch die Wandelemente die Position der Schablone 18' auf der Sensorvorrichtung 10' exakt festgelegt.

## Patentansprüche

1. Verfahren zum Aufbringen einer Haftschicht (30) auf eine Sensorvorrichtung (10), mit den Schritten:
a) Aufsetzen einer Schablone (18) auf die Sensorvorrichtung (10), wobei die Schablone (18) eine Schablonenöffnung (22) aufweist und die Schablonenöffnung (22) auf einer Oberfläche (16) der Sensorvorrichtung (10) angeordnet wird;
b) Befüllen der Schablonenöffnung (22) mit einer gelartigen Masse (28), um die Oberfläche (16) der Sensorvorrichtung (10) innerhalb der Schablonenöffnung (22) zu bedecken;
c) Härtenlassen der Masse (28), um die Haftschicht (30) zu bilden, **dadurch gekennzeichnet dass** in Schritt b) die Sensorvorrichtung (10) und die Schablone (18) derart angeordnet werden, dass die genannte Oberfläche (16) nach oben gerichtet und horizontal ist,
und wobei vor und/oder bei dem Härtenlassen der Masse (28) unter dem Einfluss der Schwerkraft eine gleichmäßige Höhe der Masse (28) an einer freien Oberseite der Masse (28) in der Schablonenöffnung (22) ausgebildet wird.

2. Verfahren nach Anspruch 1, wobei in Schritt a) die Schablone (18) formschlüssig auf die Sensorvorrichtung (10) aufgesetzt wird.

3. Verfahren nach einem der vorstehenden Ansprüche, bei dem in Schritt b) ein Rand (24) der Schablonenöffnung (22) auf der Oberfläche (16) aufliegt.

4. Verfahren nach einem der vorstehenden Ansprüche, bei dem ein Grundkörper (20, 26) der Schablone (18) biegsam und/oder elastisch ist und vorzugsweise aus einem Silikongummi hergestellt ist.

5. Verfahren nach einem der vorstehenden Ansprüche, bei dem die Schablone (18) eine Wand (26) aufweist und so auf die Sensorvorrichtung (10) aufgesetzt wird, dass die Wand (26) die Sensorvorrichtung (10) seitlich umgreift.

6. Verfahren nach einem der vorstehenden Ansprüche, bei dem die Schablonenöffnung (22) geneigte Wände aufweist.

7. Schablone (18) zur Verwendung in dem Verfahren nach einem der Ansprüche 1 bis 7, **dadurch gekennzeichnet, dass** die Schablone Eine Grundplatte (20), in der eine Schablonenöffnung (22) gebildet ist, und eine von der Grundplatte (20) abstehende Wand (26), um eine entsprechend geformte Sensorvorrichtung (10) seitlich zu umgreifen, aufweist.

8. Schablone nach Anspruch 7, wobei zumindest ein Grundkörper (20, 26) der Schablone (18) biegsam und/oder elastisch ist und vorzugsweise aus einem Silikongummi hergestellt ist.

9. Schablone nach Anspruch 7 oder 8, wobei die Schablonenöffnung (22) in Bezug auf die Grundplatte (20) geneigte Wände aufweist.

## Claims

1. Method for applying an adhesive layer (30) to a sensor device (10), comprising the steps:
a) Placing a stencil (18) on the sensor device (10), wherein the stencil (18) has a stencil opening (22) and the stencil opening (22) is arranged on a surface (16) of the sensor device (10);
b) Filling the stencil opening (22) with a gel-like compound (28) in order to cover the surface (16) of the sensor device (10) within the stencil opening (22);
c) Allowing the compound (28) to harden in order to form the adhesive layer (30),
**characterised in that**
in step b) the sensor device (10) and the stencil (18) are arranged such that said surface (16) faces upwards and is horizontal,
and wherein, before and/or during hardening of the compound (28), a uniform height of the compound (28) is formed, under the influence of gravity, in the stencil opening (22) on a free upper side of the compound (28).

2. Method according to claim 1, wherein in step a) the stencil (18) is placed on the sensor device (10) in a form-locking manner.

3. Method according to one of the previous claims, wherein in step b) an edge (24) of the stencil opening (22) lies on the surface (16).

4. Method according to one of the previous claims, wherein a base body (20, 26) of the stencil (18) is flexible and/or elastic and is preferably made of a silicone rubber.

5. Method according to one of the previous claims, wherein the stencil (18) has a wall (26) and is placed on the sensor device (10) in such a way that the wall (26) laterally embraces the sensor device (10).

6. Method according to one of the previous claims, wherein the stencil opening (22) has sloping walls.

7. Stencil (18) for use in the method according to one of the claims 1 to 7, **characterised in that** the stencil has a base plate (20) in which a stencil opening (22) is formed, and a wall (26) projecting from the base plate (20) in order to laterally embrace a correspondingly formed sensor device (10).

8. Stencil according to claim 7, wherein at least one base body (20, 26) of the stencil (18) is flexible and/or elastic and is preferably made of a silicone rubber.

9. Stencil according to claim 7 or 8, wherein the stencil opening (22) has walls which slope in relation to the base plate (20).

## Revendications

1. Procédé pour appliquer une couche de liaison (30) sur un dispositif formant capteur (10), comprenant les étapes consistant à:
a) placer un pochoir (18) sur le dispositif formant capteur (10), le pochoir (18) présentant une ouverture de pochoir (22) et l'ouverture de pochoir (22) étant disposée sur une surface supérieure (16) du dispositif formant capteur (10);
b) remplir l'ouverture de pochoir (22) avec une masse sous forme de gel (28) pour recouvrir la surface (16) du dispositif formant capteur (10) à l'intérieur de l'ouverture de pochoir (22);
c) laisser durcir la masse (28) pour former la couche de liaison (30),
**caractérisé en ce que**
à l'étape b), le dispositif formant capteur (10) et le pochoir (18) sont agencés de sorte que ladite surface supérieure (16) soit dirigée vers le haut et horizontale,
et dans lequel avant et/ou pendant le durcissement de la masse (28), sous l'influence de la gravité, une hauteur uniforme de la masse (28) est formée sur un côté supérieur libre de la masse (28) dans l'ouverture de pochoir (22).

2. Procédé selon la revendication 1, dans lequel à l'étape a), le pochoir (18) est placé par liaison de forme sur le dispositif formant capteur (10).

3. Procédé selon l'une des revendications précédentes, dans lequel à l'étape b), un bord (24) de l'ouverture du pochoir (22) repose sur la surface supérieure (16).

4. Procédé selon l'une des revendications précédentes, dans lequel un corps de base (20, 26) du pochoir (18) est flexible et/ou élastique et est de préférence constitué d'un caoutchouc de silicone.

5. Procédé selon l'une des revendications précédentes, dans lequel le pochoir (18) présente une paroi (26) et est placé sur le dispositif formant capteur (10) de sorte que la paroi (26) vient en prise latéralement avec le dispositif formant capteur (10).

6. Procédé selon l'une des revendications précédentes, dans lequel l'ouverture de pochoir (22) présente des parois inclinées.

7. Pochoir (18) destiné à être utilisé dans le procédé selon l'une des revendications 1 à 7, **caractérisé en ce que** le pochoir présente une plaque de base (20) dans laquelle une ouverture de pochoir (22) est formée, et une paroi (26) faisant saillie à partir de la plaque de base (20) pour venir en prise latéralement avec un dispositif formant capteur de forme correspondante (10).

8. Pochoir selon la revendication 7, dans lequel au moins un corps de base (20, 26) du pochoir (18) est flexible et/ou élastique et est de préférence constitué d'un caoutchouc de silicone.

9. Pochoir selon la revendication 7 ou 8, dans lequel l'ouverture de pochoir (22) présente des parois inclinées par rapport à la plaque de base (20).
